# EUROPÄISCHE PATENTANMELDUNG

(11) **EP 2 458 150 A1**
(43) Veröffentlichungstag der Anmeldung: **30.05.2012**
(21) Anmeldenummer: 11187818.7
(22) Anmeldetag: 04.11.2011
(51) Int. Cl.: F01D 5/16, F01D 25/06, B64C 11/00, F04D 29/66, F16F 15/00, F16F 15/18, H01L 41/113

(54) **Verfahren zum Dämpfen von während des Betriebes auftretenden mechanischen Schwingungen in einer Turbomaschinenschaufel, Turbomaschinenschaufel zur Durchführung des Verfahrens sowie piezoelektrisches Dämpfungselement zum Einbau in eine solche Turbomaschinenschaufel**

(30) Priorität: 24.11.2010 CH 19662010
(71) Anmelder: Alstom Technology Ltd, 5400 Baden (CH)
(72) Erfinder: Szwedowicz, Jaroslaw Leszek, 5330 Bad Zurzach (CH); Kappis, Wolfgang, 5442 Fislisbach (CH); Panning, Lars, 30165 Hannover (DE); Schwarzendahl, Sebastian Marc, 30167 Hannover (DE); Neubauer, Marcus, 30459 Hannover (DE); Hohl, Andreas, 30163 Hannover (DE); Wallaschek, Jörg, 33106 Paderborn (DE)

(57) **Zusammenfassung**

Die vorliegende Erfindung bezieht sich auf ein Verfahren zum Beeinflussen, insbesondere Dämpfen beziehungsweise Unterdrücken von während des Betriebes auftretenden mechanischen Schwingungen in einer Turbomaschinenschaufel (10), bei welchem Verfahren mechanische Schwingungsenergie der Turbomaschinenschaufel (10) zunächst in elektrische Energie und die erzeugte elektrische Energie dann in Verlustwärme umgesetzt wird.

Eine besonders einfach und vielseitig anwendbare und wirkungsvolle Dämpfung wird dadurch erreicht, dass zur Umsetzung von mechanischer Schwingungsenergie in elektrische Energie der piezoelektrische Effekt verwendet wird.

## Beschreibung

### TECHNISCHES GEBIET

Die vorliegende Erfindung bezieht sich auf das Gebiet der Turbomaschinen wie beispielsweise Windturbinen, Dampfturbinen, Gasturbinen oder Verdichter. Sie betrifft ein Verfahren zum Beeinflussen, insbesondere Dämpfen beziehungsweise Unterdrücken von während des Betriebes auftretenden mechanischen Schwingungen in einer Turbomaschinenschaufel gemäss dem Oberbegriff des Anspruchs 1. Sie betrifft weiterhin eine Turbomaschinenschaufel zur Durchführung des Verfahrens sowie ein piezoelektrisches Dämpfungselement zum Einbau in eine solche Turbomaschinenschaufel.

### STAND DER TECHNIK

Beim Betrieb von Turbinen (oder Verdichtern) können nicht-synchrone und synchrone Schaufelvibrationen durch aerodynamische (z. B. Flattern) oder mechanische (z. B. durch Reiben der Schaufeln am Gehäuse) Effekte erzeugt werden. Resonanzen in der Schaufel können zu Problemen der Schwingungsrissbildung ("high-cycle fatigue" HCF) führen, die eine kritische Ausfallart für Turbinen- und Verdichterschaufeln darstellt.

Um Turbomaschinenschaufeln gegen derartige HCF-Fehler zu schützen, werden die Schaufelblätter mit integralen Deckbandelementen oder Winglets gekoppelt, welche die Steifigkeit der Schaufelanordnung einer Turbinenstufe erhöhen und Vibrationen durch Reibung zwischen den benachbarten Schaufeln dämpfen beziehungsweise unterdrücken. Derartige Anordnungen sind beispielsweise aus der Druckschrift EP 0 214 393 A1 oder der Druckschrift US 3,752,599 bekannt.

Wenn das Konzept der Turbine freistehende Schaufeln erfordert, können Reibung erzeugende Vorrichtungen an den Schaufeln unterhalb der Plattformen oder zwischen den Schaufeln als Reibungsstifte angeordnet werden, oder innerhalb der Schaufeln untergebracht werden. Derartige Lösungen sind beispielsweise aus der Druckschrift EP 1 538 304 A2 oder der Druckschrift US 4,460,314 oder der Druckschrift US 6,979,180 B2 bekannt.

Der Dämpfungseffekt derartiger Reibung erzeugender Vorrichtungen und reibenden Kopplungen hängt jedoch von der optimalen Normalkraft und der Steifigkeit des Kopplungskontaktes ab, die in geeigneter Weise auf die interessierende (zu dämpfende) Resonanzfrequenz abgestimmt werden müssen. Mit anderen Worten, die Reibungsdämpfung kann nur für eine bestimmte Vibrationsfrequenz der Schaufel effektiv benutzt werden, während andere Frequenzen unzureichend oder gar nicht gedämpft werden.

Reibungsdämpfer sind stark amplitudenabhängig, und jede Veränderung in der Steifigkeit und im beteiligten Massesystem aufgrund von Abrieb oder anderen Veränderungsprozessen im System resultiert in geänderten Resonanzfrequenzen, welche die Effektivität der Reibungsdämpfer verschlechtern.

Es ist aber bereits auch vorgeschlagen worden (siehe z. B. die Druckschrift EP 0 727 564 A1), Vibrationen von Turbinenschaufeln dadurch zu dämpfen, dass durch Wechselwirkung von Permanentmagneten mit den Schaufeln Wirbelströme erzeugt werden, die in Verlustwärme umgewandelt werden. Der Einsatzbereich solcher Lösungen ist jedoch eng begrenzt, weil die Wechselwirkung auf den Bereich zwischen Schaufelspitze und gegenüberliegender Gehäusewand beschränkt ist. Innerhalb des Schaufelblattes auftretende Vibrationen können so nicht wirksam gedämpft werden.

Es ist weiterhin bekannt (siehe z. B. die Druckschrift JP 2003138904), zur aktiven Steuerung einer reibenden Kopplung zwischen benachbarten Turbinenschaufeln in den Schaufeln piezoelektrische Elemente einzusetzen, mit denen der Reibungskontakt während des Betriebes optimiert und nachjustiert werden kann. Für freistehende Schaufeln ist diese Lösung nicht geeignet. Derartige piezoelektrische Elemente können aber auch eingesetzt werden, um den Kontaktdruck solcher reibenden Kopplungen zu messen und zu überwachen (JP 2003138910).

Insgesamt gesehen sind die auf Reibung basierenden Dämpfungssysteme kompliziert in Aufbau und Einsatz und lassen sich nur schwer frequenzmässig abstimmen, während das auf Wirbelstromerzeugung beruhende Prinzip nur sehr begrenzt einsetzbar ist.

### DARSTELLUNG DER ERFINDUNG

Es ist daher eine Aufgabe der Erfindung, ein Verfahren der eingangs genannten Art zu schaffen, welches die Nachteile bekannter Verfahren vermeidet und sich durch eine einfache und sehr breite Anwendbarkeit auszeichnet.

Es ist eine weitere Aufgabe der Erfindung, eine Turbomaschinenschaufel zur Durchführung des Verfahrens anzugeben.

Eine andere Aufgabe der Erfindung ist es, ein piezoelektrisches Dämpfungselement zum Einbau in eine Turbomaschinenschaufel anzugeben.

Diese und andere Aufgaben werden durch die Ansprüche 1, 6 und 17 gelöst.

Bei dem erfindungsgemässen Verfahren zum Beeinflussen, insbesondere Dämpfen beziehungsweise Unterdrücken von während des Betriebes auftretenden mechanischen Schwingungen in einer Turbomaschinenschaufel wird mechanische Schwingungsenergie der Turbomaschinenschaufel zunächst in elektrische Energie und die erzeugte elektrische Energie dann in Verlustwärme umgesetzt. Das erfindungsgemässe Verfahren zeichnet sich dadurch aus, dass zur Umsetzung von mechanischer Schwingungsenergie in elektrische Energie der piezoelektrische Effekt verwendet wird.

Eine Ausgestaltung des Verfahrens nach der Erfindung ist dadurch gekennzeichnet, dass zur Umsetzung von mechanischer Schwingungsenergie in elektrische Energie wenigstens ein piezoelektrisches Dämpfungselement fest in die zu dämpfende Turbomaschinenschaufel eingebaut wird, welches durch die mechanischen Schwingungen der Turbomaschinenschaufel verformt wird und eine elektrische Spannung erzeugt, und mittels der erzeugten elektrischen Spannung in einem angeschlossenen elektrischen Netzwerk Ohmsche Verlustwärme produziert wird.

Insbesondere umfasst das elektrische Netzwerk als Nebenschluss eine Serieschaltung aus einer Induktivität und einem Ohmschen Widerstand, wobei das piezoelektrische Dämpfungselement nach Art einer Kapazität einen zwischen Elektroden angeordneten Piezokörper umfasst, und die Resonanzfrequenz des resultierenden Schwingkreises auf die zu dämpfende mechanische Schwingung der Turbomaschinenschaufel abgestimmt wird.

Weiterhin ist es vorteilhaft, wenn die elektrischen Schwingungen im piezoelektrischen Dämpfungselement gemessen und zur Bestimmung und zur Überwachung der mechanischen Schwingungen in der Turbomaschinenschaufel ausgewertet werden.

Eine andere Ausgestaltung des erfindungsgemässen Verfahrens ist dadurch gekennzeichnet, dass zum Einbau des piezoelektrischen Dämpfungselements in die Turbomaschinenschaufel ein Hohlraum eingebracht wird, und dass das piezoelektrische Dämpfungselement in den Hohlraum eingesetzt und dort mit der Turbomaschinenschaufel, insbesondere durch Stoffschluss oder mechanisches Verspannen, fest verkoppelt wird.

Die erfindungsgemässe Turbomaschinenschaufel zur Durchführung des Verfahrens nach der Erfindung ist dadurch gekennzeichnet, dass in die Turbomaschinenschaufel wenigstens ein piezoelektrisches Dämpfungselement fest eingebaut ist.

Eine Ausgestaltung der erfindungsgemässen Turbomaschinenschaufel ist dadurch gekennzeichnet, dass das wenigstens eine piezoelektrische Dämpfungselement als Piezoelement ausgebildet ist, welches durch einen an ein elektrische Netzwerk angeschlossen, insbesondere durch einen einen Ohmschen Widerstand enthaltenden Nebenschluss elektrisch gedämpft ist.

Insbesondere umfasst das elektrische Netzwerk bzw. der Nebenschluss eine Serieschaltung aus dem Ohmschen Widerstand und einer Induktivität.

Dabei kann das elektrische Netzwerk bzw. der Nebenschluss vorzugsweise eine Spule umfassen.

Gemäss einer anderen Ausgestaltung umfasst das Piezoelement einen Stapel aus Piezokörpern und Elektroden.

Eine andere Ausgestaltung der Turbomaschinenschaufel nach der Erfindung ist dadurch gekennzeichnet, dass in der Turbomaschinenschaufel ein Hohlraum ausgebildet ist, in welchem das wenigstens eine piezoelektrische Dämpfungselement untergebracht ist.

Insbesondere ist das wenigstens eine piezoelektrische Dämpfungselement von einem eigenen Gehäuse umgeben, welches vorzugsweise aus einem oberen und unteren Teilgehäuse zusammengesetzt ist.

Gemäss einer anderen Ausgestaltung der Erfindung ist das wenigstens eine piezoelektrische Dämpfungselement mit der Turbomaschinenschaufel, insbesondere durch Stoffschluss oder mechanisches Verspannen, fest verkoppelt.

Eine weitere Ausgestaltung ist dadurch gekennzeichnet, dass über die Turbomaschinenschaufel verteilt mehrere piezoelektrische Dämpfungselemente in der Turbomaschinenschaufel angeordnet sind.

Eine wieder andere Ausgestaltung zeichnet sich dadurch aus, dass das wenigstens eine piezoelektrische Dämpfungselement drahtlos mit einer Messvorrichtung zum Empfang und zur Auswertung der an dem piezoelektrischen Dämpfungselement anstehenden Signale verbunden ist.

Das erfindungsgemässe piezoelektrische Dämpfungselement zum Einbau in eine erfindungsgemässe Turbomaschinenschaufel ist dadurch gekennzeichnet, dass das piezoelektrische Dämpfungselement als Piezoelement ausgebildet ist, welches an ein elektrisches Netzwerk angeschlossen, insbesondere durch einen einen Ohmschen Widerstand enthaltenden Nebenschluss elektrisch gedämpft ist. Eine Ausgestaltung des piezoelektrischen Dämpfungselements ist dadurch gekennzeichnet, dass das Piezoelement einen Stapel aus Piezokörpern und Elektroden umfasst.

Eine andere Ausgestaltung ist dadurch gekennzeichnet, dass das elektrische Netzwerk bzw. der Nebenschluss eine Serieschaltung aus dem Ohmschen Widerstand und einer Induktivität umfasst.

Insbesondere umfasst das elektrische Netzwerk bzw. der Nebenschluss eine Spule, die eine beliebige Form haben kann.

Gemäss einer anderen Ausgestaltung ist das piezoelektrische Dämpfungselement von einem Gehäuse umgeben, welches vorzugsweise aus einem oberen und unteren Teilgehäuse zusammengesetzt ist.

Schliesslich kann im elektrischen Netzwerk ein zeitlich variabler Widerstand vorgesehen sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Ansicht eine beispielhafte Turbinenschaufel mit den im Inneren angeordneten piezoelektrischen Dämpfungselementen gemäss einem Ausführungsbeispiel der Erfindung;
- Fig. 2: ein Ersatzschaltbild eines eingebauten Piezoelements mit Nebenschluss, mit einem mechanischen Freiheitsgrad;
- Fig. 3: in einer Schnittansicht ein Ausführungsbeispiel eines piezoelektrischen Dämpfungselements nach der Erfindung;
- Fig. 4: ein Beispiel für den Einbau eines piezoelektrischen Dämpfungselements nach Fig. 3 in eine Turbinenschaufel;
- Fig. 5: in einer perspektivischen Ansicht ein piezoelektrisches Dämpfungselement nach Fig. 3 einschliesslich einer Spule im Nebenschluss, welches in einem zweiteiligen Gehäuse untergebracht ist;
- Fig. 6: ein Beispiel für den Einbau des Elementes aus Fig. 5 in einer Turbinenschaufel vergleichbar zu Fig. 4;
- Fig. 7: in mehreren Teilfiguren (a) bis (c) verschiedene Schritte beim Einbau eines piezoelektrischen Dämpfungselements in eine Turbinenschaufel gemäss einem Ausführungsbeispiel der Erfindung und
- Fig. 8: eine prinzipielle Anordnung zur Übertragung und Auswertung von Signalen aus in eine Turbinenschaufel eingebauten piezoelektrischen Dämpfungselementen.

### WEGE ZUR AUSFÜHRUNG DER ERFINDUNG

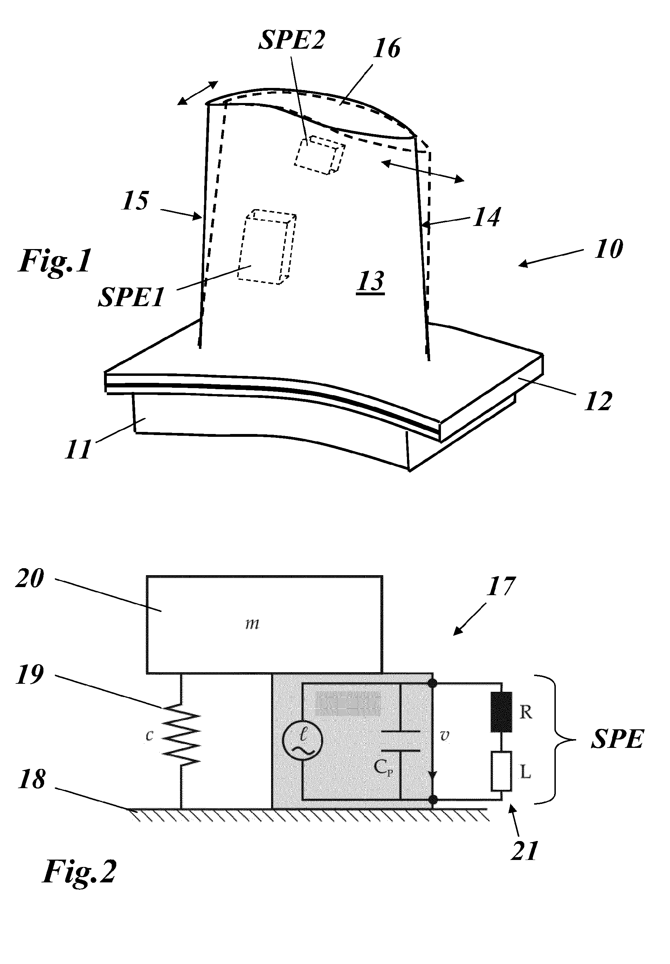

Die vorliegende Erfindung basiert massgeblich auf dem piezoelektrischen Effekt. Der piezoelektrische Effekt ist das Vermögen eines Materials, eine elektrische Ladung auszubilden, wenn es von externen Kräften beaufschlagt wird, also letztendlich mechanische Energie in elektrische Energie umzuwandeln. Werden die Stellen, an denen die erzeugte Spannung auftritt, an ein elektrisches Netzwerk mit Ohmschem Widerstand angeschlossen, kann ein Teil der erzeugten elektrischen Energie in Verlustwärme umgewandelt werden. Um nicht von aussen Energie in die rotierenden Turbomaschinenschaufeln bzw. Turbinenschaufeln einspeisen zu müssen, sollte das elektrische Netzwerk, das einen Nebenschluss bildet, passiv ausgebildet sein. Ein hinsichtlich der Dämpfung besonders wirkungsvolles passives Netzwerk besteht aus einer Induktivität L in Serie mit einem elektrischen Widerstand R (siehe Nebenschluss 21 in Fig. 2). Ein solcher Nebenschluss wird häufig als "LR-Nebenschluss" bezeichnet und kann generell die unterschiedlichsten Kombinationen von Induktivitäten L und Widerständen R in Serie- und/oder Parallelschaltung, eigenversorgte Schaltnetzwerke (vom Typ "selfpowered synchronized switch damping on inductor" (SSDI)) und dgl. umfassen. Es ist aber auch vorstellbar, aktive Lösungen mit negativer Kapazität einzusetzen oder generell im Netzwerk einen zeitlich variablen Widerstand vorzusehen.

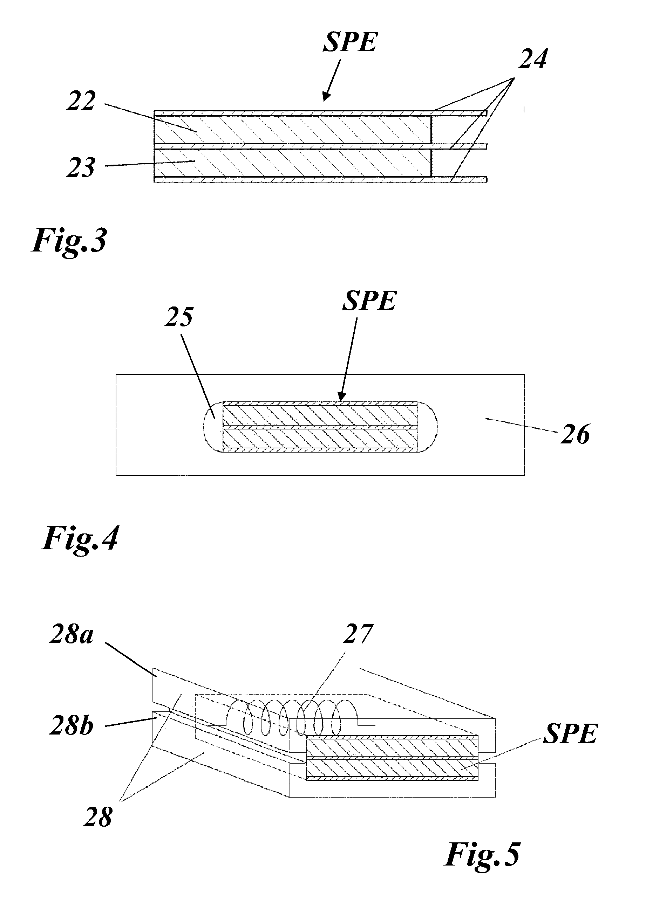

Fig. 2 zeigt ein Ersatzschaltbild 17 eines mit einem mechanischen Freiheitsgrad (senkrecht zur Bezugsebene) eingebauten piezoelektrischen Dämpfungselements SPE mit Nebenschluss 21. Das piezoelektrische Dämpfungselement SPE liegt zwischen einer Bezugsebene 18 und einer Masse 20 der Grösse m, die federnd an die Bezugsebene 18 angekoppelt ist (Feder 19 mit Federkonstante c). Das mit Elektroden an gegenüberliegenden Oberflächen versehene Piezoelement (grauer Kasten in Fig. 2) kann elektrisch als Kapazität der Grösse Cₚ angesehen werden, die parallel zu einer inneren Spannungsquelle I liegt, und an der aussen bei mechanischer Belastung eine Spannung v anliegt. Wird das Piezoelement mit einem Nebenschluss 21 mit einer Serieschaltung aus Widerstand R und Induktivität L versehen (siehe die Spule 27 in Fig. 5), ergibt sich ein Schwingkreis, der sich wie ein frequenzmässig abgestimmter Schwingungsdämpfer verhält. Ähnlich wie ein abgestimmter Schwingungsdämpfer muss der Schwingkreis auf die Schwingungen des Systems 18, 19, 20 abgestimmt werden, um dämpfend zu wirken. Der Schwingkreis kann aber auch nach Art eines Tilgers auf die Schaufel und deren Schwingungen zurückwirken und mit einer eigenständigen Frequenz schwingen, die dann mehr oder weniger stark gedämpft wird.

Werden gemäss Fig. 1 derartige piezoelektrische Dämpfungselemente SPE1, SPE2 in das Innere einer Turbinenschaufel 10, die im dargestellten Beispiel einen Schaufelfuss 11, eine Plattform 12, ein Schaufelblatt 13 mit Vorderkante 14 und Hinterkante 15 und eine Schaufelspitze 16 umfasst und in der durch die Doppelpfeile angezeigten Weise vibriert, eingebaut, erzeugen die Vibrationen der Turbinenschaufel 10 Deformationen im Piezoelement, welche die Kapazität Cₚ des piezoelektrischen Dämpfungselements SPE mit einer entsprechenden Spannung aufladen. Der Nebenschluss 21 wandelt dann die Schwingungsenergie der Schaufel in Abhängigkeit von den vorher definierten Parametern und von der Position des Dämpfungselements auf der vibrierenden Schaufel in Verlustenergie um.

Der Vorteil eines solchen piezoelektrischen Dämpfungselements SPE liegt darin, dass die Dämpfung unabhängig ist von der Normalkraft und von der Steifigkeit des mechanischen Kontakts, die bei der Reibungsdämpfung eine wesentliche Rolle spielen. Darüber hinaus kann die Dämpfungswirkung bei dieser Anordnung für mehr als eine Resonanzfrequenz der Schaufel eingestellt werden, indem zum Beispiel mehrere LR-Nebenschlüsse mit entsprechend unterschiedlichen Parametern vorgesehen werden. Es können aber auch mehrere piezoelektrische Dämpfungselemente durch ein gemeinsames elektrisches Netzwerk miteinander verbunden sein.

Im Vergleich zum herkömmlichen Reibungsdämpfer hat das piezoelektrische Dämpfungselement weiterhin den Vorteil, dass seine Wirkung unabhängig von Phasenverschiebungen und Grössen der Vibrationsamplituden benachbarter Schaufeln bei der Resonanzfrequenz ist. Auch kann die Dämpfungswirkung des piezoelektrischen Dämpfungselements leicht an eine andere Resonanzfrequenz angepasst werden, indem lediglich die elektrische Schaltung verändert wird. So können beispielsweise bei einem entsprechenden Zugang zum Inneren der Schaufel die Parameter des Nebenschlusses 21 nachträglich mittels Laserstrahl (z. B. durch Änderung der Geometrie einer Widerstandsbahn) oder dergleichen verändert werden.

Weiterhin besteht im Vergleich zum herkömmlichen Reibungsdämpfer der technische Vorteil, dass durch Einsatz des vorgeschlagenen Dämpfers die Resonanzfrequenz der ungestörten Schaufel weniger zu einem anderen Wert hin verschoben wird, was bei der Konstruktion der Turbine ein wichtiges Kriterium ist. Auch entfallen beim piezoelektrischen Dämpfer Probleme mit dem Abrieb, die bei der Reibungsdämpfung zu berücksichtigen sind.

Das piezoelektrische Dämpfungselement gemäss der Erfindung kann z. B. für Turbinen- und Verdichterschaufeln von Dampf-, Gas- und Windmaschinen eingesetzt werden. Das piezoelektrische Dämpfungselement wird vorzugsweise in einen Hohlraum in der Schaufel oder im zugehörigen Schaufelträger eingebaut. Gestalt und Ort des Hohlraumes können dabei weitgehend unabhängig optimal gewählt werden.

Ein Ausführungsbeispiel eines piezoelektrischen Dämpfungselementes nach der Erfindung ist im Schnitt in Fig. 3 dargestellt. Das piezoelektrische Dämpfungselement SPE der Fig. 3 ist als Stapel aufgebaut aus zwei flächigen, scheibenförmigen Piezokörpern 22 und 23 aus einem für den piezoelektrischen Effekt und die Betriebstemperatur der Turbine geeigneten Material, die sich im Stapel abwechseln mit Kontaktelementen beziehungsweise Elektroden 24. Materialauswahl und Verbindungstechnik für die Elemente 22-24 sind dem Fachmann grundsätzlich bekannt.

Das piezoelektrische Dämpfungselement SPE der Fig. 3 kann direkt gemäss Fig. 4 in einen dafür vorgesehenen Hohlraum 25 innerhalb einer Schaufel 26 eingebaut beziehungsweise dort zusammengebaut werden. Die gegenüberliegenden Aussenseiten des piezoelektrischen Dämpfungselements SPE sind fest an die Innenwände des Hohlraumes 25 angekoppelt. Dies kann auf unterschiedliche Weise geschehen wie zum Beispiel durch Kleben, Löten oder mechanisches Einspannen auf der Basis von Reibung oder thermischer Ausdehnung. Nach dem Einbau des Elements kann der Hohlraum 25 durch eine Abdeckung geschützt werden, die beispielsweise durch Löten oder Schweissen mit dem Rand des Hohlraumes 25 verbunden wird. Nach dem Verschliessen kann die Oberfläche der Anordnung nachbearbeitet werden, um aerodynamische Anforderungen an die Schaufel zu erfüllen. Es ist aber auch denkbar, den Hohlraum 25 mit dem eingebauten piezoelektrischen Dämpfungselement SPE mit einem Material aufzufüllen oder auszugiessen, das, beispielsweise durch Wärmeeinwirkung, verfestigt und mit dem Element und der Schaufel eine feste Einheit bildet.

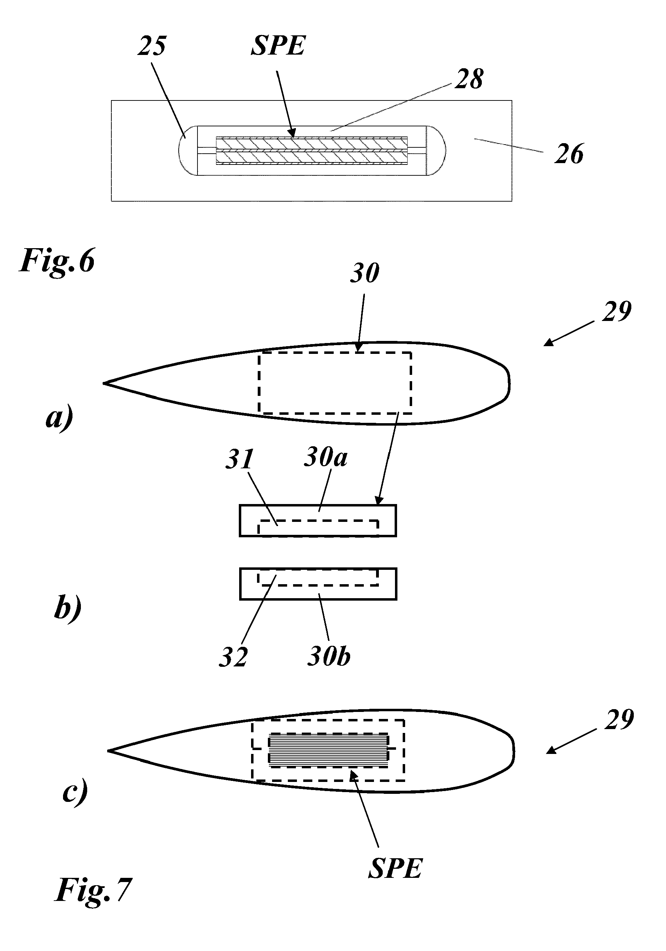

Neben dem direkten Einbau des piezoelektrischen Dämpfungselements SPE in den Hohlraum 25 in der Schaufel 26 gemäss Fig. 4 ist es aber auch möglich, das piezoelektrische Dämpfungselement SPE gemäss Fig. 5 zunächst zwischen ein oberes Teilgehäuse 28a und ein unteres Teilgehäuse 28b einzufügen, die aus einem Metall oder einem anderen für den Anwendungszweck geeigneten Material bestehen und zusammen ein Gehäuse 28 bilden. Gemäss Fig. 6 kann dann das piezoelektrische Dämpfungselement SPE zusammen mit seinem Gehäuse 28 in den Hohlraum 25 in der Schaufel 26 eingebaut werden. Durch eine geeignete Materialwahl beim Gehäuse 28 können gegebenenfalls andere Verbindungstechniken zur Verbindung zwischen Gehäuse 28 und Schaufel 26 eingesetzt werden, als wenn das piezoelektrische Dämpfungselement SPE ohne Gehäuse direkt eingebaut wird.

Der äussere Umriss des Gehäuses 28 kann exakt an das äussere Profil der Turbinenschaufel angepasst werden, so dass eine Nachbearbeitung in diesem Fall entbehrlich ist. Ein derartiger angepasster Umriss kann beispielsweise durch selektives Laserschmelzen (Selective Laser Melting SLM) nach Massgabe der dreidimensional abgetasteten Geometrie der entsprechenden Turbinenschaufel hergestellt werden. Der Einsatz von anderen Rapid-Manufacturing-Techniken ist ebenfalls denkbar.

Eine andere Möglichkeit besteht darin, gemäss Fig. 7 aus der Turbinenschaufel 29 lokal an der Einsatzstelle einen Ausschnitt 30 auszuschneiden (Fig. 7(a)), diesen Ausschnitt 30 dann in einen Oberteil 30a und ein Unterteil 30b zu zerteilen (Fig. 7(b)), in die beiden Teile 30a,b jeweils eine Ausnehmung 31 beziehungsweise 32 einzubringen und die beiden Teile dann als Teilgehäuse (wie in Fig. 5 und 6) für ein piezoelektrisches Dämpfungselement SPE zu verwenden. Die Anordnung aus piezoelektrischem Dämpfungselement SPE und dem Gehäuse (30a,b) wird dann wieder in die Schaufel 29 eingebaut (Fig. 7(c)).

Auch hier können wieder verschiedene Techniken der festen Verbindung zwischen dem Gehäuse (30a,b) mit dem darin befindlichen piezoelektrischen Dämpfungselement SPE und der Turbinenschaufel eingesetzt werden. Beispielsweise kann ein Hartlötprozess eingesetzt werden. In diesem Prozess wird das Lot auf Schmelztemperatur oberhalb 450 °C erhitzt, so dass es sich dann zwischen dem Gehäuse (30a,b) und der Turbinenschaufel 29 verteilt. Wichtig dabei ist, dass das piezoelektrische Dämpfungselement nicht über seine Curie-Temperatur erhitzt wird, weil es sonst seine piezoelektrischen Eigenschaften verliert.

Die Position des piezoelektrischen Dämpfungselements SPE wird festgelegt im Hinblick auf eine möglichst hohe Dämpfung der betreffenden Schwingungen der Turbinenschaufel, wobei es wichtig ist, dass die Lebensdauer der Schaufel insgesamt nicht reduziert wird. Insbesondere können, wie in Fig. 1 dargestellt, mehrere piezoelektrische Dämpfungselemente SPE1, SPE2 an verschiedenen Stellen der Turbinenschaufel 10 angeordnet sein, wenn dort entsprechende Dehnungen auftreten.

In der Praxis können alle Schaufeln einer Turbinenstufe (Rotorscheibe) mit piezoelektrischen Dämpfungselementen SPE ausgestattet werden. Es ist aber auch denkbar, nur ausgewählte Schaufeln beziehungsweise Schaufelblätter einer Turbinenstufe mit solchen Elementen auszurüsten. Die Auswahl kann dabei auf der Basis eines vorbestimmten bewussten Verstimmungsmusters oder eines gemessenen Verstimmungsmusters in einer vorhandenen Turbinenstufe erfolgen. Falls es erwünscht ist, können piezoelektrische Dämpfungselemente, die auf verschiedenen Turbinenschaufeln einer Turbinenstufe angeordnet sind, in einem (elektrischen) Netzwerk miteinander verbunden werden, um den Dämpfungseffekt in der Turbinenstufe zu verstärken und zu optimieren.

Die zulässige Betriebstemperatur und andere Belastungsgrössen werden nur durch die Wahl des Piezomaterials und der Verbindungstechnik bestimmt beziehungsweise begrenzt. Es sind piezoelektrische Materialien mit einer hohen Curie-Temperatur erhältlich. Für den Einsatz in Turbomaschinen ist beispielsweise Bariumtitanat eine gute Wahl, das eine hohe Betriebstemperatur von ungefähr 500 °C hat. Leider hat Bariumtitanat jedoch einen vergleichsweise niedrigen piezoelektrischen Modul und eine niedrige Permittivität. Bis zu Temperaturen von 350 °C ist daher Bleimetaniobat vorzuziehen. Materialien vom PZT-Typ (Blei-Zirkonat-Titanat) haben den höchsten piezoelektrischen Modul, sind jedoch nur bis zu Temperaturen von 180 °C einsetzbar.

Es ist weiterhin denkbar, die vorgeschlagenen piezoelektrischen Dämpfungselemente auch zusammen mit herkömmlichen Reibungsdämpfern einzusetzen, um die Gesamtdämpfung in der Schaufel zu optimieren.

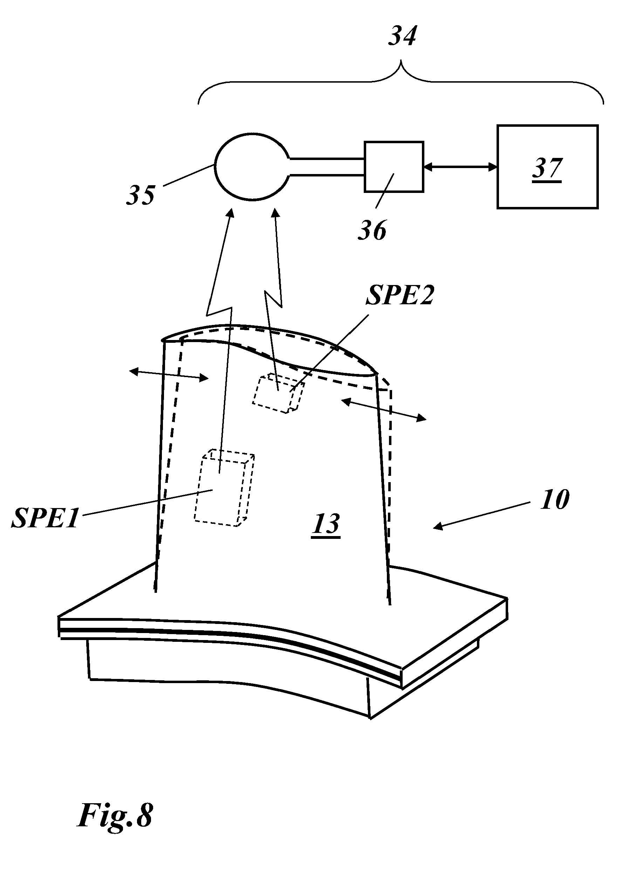

Darüber hinaus ist es möglich, gemäss Fig. 8 die piezoelektrischen Dämpfungselemente SPE gleichzeitig als Sensoren zur Messung der Schaufelschwingungen einzusetzen. Die gemessenen Signale können drahtlos (telemetrisch) von der rotierenden Turbine zu einer stationären Messvorrichtung 34 übertragen werden, die mit einer (Empfangs-)Antenne 35, einem Signalempfänger 36 und einer Auswerteeinheit 37 ausgerüstet ist. Die erhaltenen Daten können zur Überwachung der Turbine, insbesondere ihres Schwingungsverhaltens, eingesetzt werden. Beide Funktionen der Dämpfung und der Vibrationsmessung können dabei gleichzeitig im System ausgeführt werden. Die beschriebene Anwendung von piezoelektrischen Dämpfungselementen SPE kann auf unterschiedliche Komponenten von Gasturbinen, Dampfturbinen und Verdichtern in der Luftfahrt, in der Schifffahrt, in der Industrie und in grossen Motoren ausgedehnt werden, sofern die Betriebstemperatur nicht die Curie-Temperatur des verwendeten piezoelektrischen Materials überschreitet.

### BEZUGSZEICHENLISTE

- 10: Turbinenschaufel
- 11: Schaufelfuss
- 12: Plattform
- 13: Schaufelblatt
- 14: Vorderkante
- 15: Hinterkante
- 16: Schaufelspitze
- 17: Ersatzschaltbild
- 18: Bezugsebene
- 19: Feder
- 20: Masse
- 21: Nebenschluss
- 22,23: Piezokörper
- 24: Kontaktelement (Elektrode)
- 25: Hohlraum
- 26,29: Turbinenschaufel
- 27: Spule (Induktivität)
- 28: Gehäuse
- 28a,b: Teilgehäuse
- 30: Ausschnitt
- 30a: Oberteil
- 30b: Unterteil
- 31,32: Ausnehmung
- 34: Messvorrichtung
- 35: Antenne
- 36: Signalempfänger
- 37: Auswerteeinheit
- SPE: piezoelektrisches Dämpfungselement
- SPE1,2: piezoelektrisches Dämpfungselement

## Patentansprüche

1. Verfahren zum Beeinflussen, insbesondere Dämpfen bzw. Unterdrücken von während des Betriebes auftretenden mechanischen Schwingungen in einer Turbomaschinenschaufel, insbesondere einer Turbinenschaufel (10, 26, 29), bei welchem Verfahren mechanische Schwingungsenergie der Turbomaschinenschaufel (10, 26, 29) zunächst in elektrische Energie und die erzeugte elektrische Energie dann in Verlustwärme umgesetzt wird, **dadurch gekennzeichnet, dass** zur Umsetzung von mechanischer Schwingungsenergie in elektrische Energie der piezoelektrische Effekt verwendet wird.

2. Verfahren nach Anspruch 1, **dadurch gekennzeichnet, dass** zur Umsetzung von mechanischer Schwingungsenergie in elektrische Energie wenigstens ein piezoelektrisches Dämpfungselement (SPE, SPE1, SPE2) fest in die zu dämpfende Turbomaschinenschaufel (10, 26, 29) eingebaut wird, welches durch die mechanischen Schwingungen der Turbomaschinenschaufel (10, 26, 29) verformt wird und eine elektrische Spannung erzeugt, und mittels der erzeugten elektrischen Spannung in einem angeschlossenen elektrischen Netzwerk (21) Ohmsche Verlustwärme produziert wird.

3. Verfahren nach Anspruch 2, **dadurch gekennzeichnet, dass** das elektrische Netzwerk als Nebenschluss (21) eine Serieschaltung aus einer Induktivität (L) und einem Ohmschen Widerstand (R)umfasst, dass das piezoelektrische Dämpfungselement (SPE, SPE1, SPE2) nach Art einer Kapazität (Cₚ) einen zwischen Elektroden (24) angeordneten Piezokörper (22, 23) umfasst, und dass die Resonanzfrequenz des resultierenden Schwingkreises auf die zu dämpfende mechanische Schwingung der Turbomaschinenschaufel (10, 26, 29) abgestimmt wird.

4. Verfahren nach Anspruch 3, **dadurch gekennzeichnet, dass** die elektrischen Schwingungen im piezoelektrischen Dämpfungselement (SPE, SPE1, SPE2) gemessen und zur Bestimmung und zur Überwachung der mechanischen Schwingungen in der Turbomaschinenschaufel (10, 26, 29) ausgewertet werden.

5. Verfahren nach Anspruch 2, **dadurch gekennzeichnet, dass** zum Einbau des piezoelektrischen Dämpfungselements (SPE, SPE1, SPE2) in die Turbomaschinenschaufel (10, 26, 29) ein Hohlraum (25, 33) eingebracht wird, und dass das piezoelektrische Dämpfungselement (SPE, SPE1, SPE2) in den Hohlraum (25, 33) eingesetzt und dort mit der Turbomaschinenschaufel (10, 26, 29), insbesondere durch Stoffschluss oder mechanisches Verspannen, fest verkoppelt wird.

6. Turbomaschinenschaufel, insbesondere Turbinenschaufel (10, 26, 29), zur Durchführung des Verfahrens nach einem der Ansprüche 1 bis 5, **dadurch gekennzeichnet, dass** in die Turbomaschinenschaufel (10, 26, 29) wenigstens ein piezoelektrisches Dämpfungselement (SPE, SPE1, SPE2) fest eingebaut ist.

7. Turbomaschinenschaufel nach Anspruch 6, **dadurch gekennzeichnet, dass** das wenigstens eine piezoelektrische Dämpfungselement (SPE, SPE1, SPE2) als Piezoelement (22, 23, 24) ausgebildet ist, welches an ein elektrisches Netzwerk (21) angeschlossen und insbesondere durch einen einen Ohmschen Widerstand (R) enthaltenden Nebenschluss (21) elektrisch gedämpft ist.

8. Turbomaschinenschaufel nach Anspruch 7, **dadurch gekennzeichnet, dass** das elektrische Netzwerk bzw. der Nebenschluss (21) eine Serieschaltung aus dem Ohmschen Widerstand (R) und einer Induktivität (L) umfasst.

9. Turbomaschinenschaufel nach Anspruch 7 oder 8, **dadurch gekennzeichnet, dass** das elektrische Netzwerk bzw. der Nebenschluss (21) eine Spule (27) umfasst.

10. Turbomaschinenschaufel nach einem der Ansprüche 7 bis 9, **dadurch gekennzeichnet, dass** das Piezoelement (22, 23, 24) einen Stapel aus Piezokörpern (22, 23) und Elektroden (24) umfasst.

11. Turbomaschinenschaufel nach einem der Ansprüche 6 bis 10, **dadurch gekennzeichnet, dass** in der Turbomaschinenschaufel (10, 26, 29) ein Hohlraum (25, 33) ausgebildet ist, in welchem das wenigstens eine piezoelektrische Dämpfungselement (SPE, SPE1, SPE2) untergebracht ist.

12. Turbomaschinenschaufel nach Anspruch 11, **dadurch gekennzeichnet, dass** das wenigstens eine piezoelektrische Dämpfungselement (SPE, SPE1, SPE2) von einem eigenen Gehäuse (28; 28a,b) umgeben ist.

13. Turbomaschinenschaufel nach Anspruch 12, **dadurch gekennzeichnet, dass** das Gehäuse (28) aus einem oberen und unteren Teilgehäuse (28a bzw. 28b) zusammengesetzt ist.

14. Turbomaschinenschaufel nach einem der Ansprüche 6 bis 13, **dadurch gekennzeichnet, dass** das wenigstens eine piezoelektrische Dämpfungselement (SPE, SPE1, SPE2) mit der Turbomaschinenschaufel (10, 26, 29) insbesondere durch Stoffschluss oder mechanisches Verspannen, fest verkoppelt ist.

15. Turbomaschinenschaufel nach einem der Ansprüche 6 bis 14, **dadurch gekennzeichnet, dass** über die Turbomaschinenschaufel (10, 26, 29) verteilt mehrere piezoelektrische Dämpfungselemente (SPE1, SPE2) in der Turbomaschinenschaufel (10, 26, 29) angeordnet sind.

16. Turbomaschinenschaufel nach einem der Ansprüche 6 bis15, **dadurch gekennzeichnet, dass** das wenigstens eine piezoelektrisches Dämpfungselement (SPE, SPE1, SPE2) drahtlos mit einer Messvorrichtung (34) zum Empfang und zur Auswertung der an dem piezoelektrischen Dämpfungselement (SPE, SPE1, SPE2) anstehenden Signale verbunden ist.

17. Piezoelektrisches Dämpfungselement (SPE, SPE1, SPE2) zum Einbau in eine Turbomaschinenschaufel (10, 26, 29) nach einem der Ansprüche 6 bis 16, **dadurch gekennzeichnet dass** das piezoelektrische Dämpfungselement (SPE, SPE1, SPE2) als Piezoelement (22, 23, 24) ausgebildet ist, welches an ein elektrische Netzwerk angeschlossen, insbesondere durch einen einen Ohmschen Widerstand (R) enthaltenden Nebenschluss (21) elektrisch gedämpft ist.

18. Piezoelektrisches Dämpfungselement nach Anspruch 17, **dadurch gekennzeichnet, dass** das Piezoelement (22, 23, 24) einen Stapel aus Piezokörpern (22, 23) und Elektroden (24) umfasst.

19. Piezoelektrisches Dämpfungselement nach Anspruch 17 oder 18, **dadurch gekennzeichnet, dass** das elektrische Netzwerk bzw. der Nebenschluss (21) eine Serieschaltung aus dem Ohmschen Widerstand (R) und einer Induktivität (L) umfasst.

20. Piezoelektrisches Dämpfungselement nach Anspruch 19, **dadurch gekennzeichnet, dass** das elektrische Netzwerk bzw. der Nebenschluss (21) eine Spule (27) umfasst.

21. Piezoelektrisches Dämpfungselement nach einem der Ansprüche 17-20, **dadurch gekennzeichnet, dass** das piezoelektrische Dämpfungselement (SPE, SPE1, SPE2) von einem Gehäuse (28; 28a,b) umgeben ist, welches vorzugsweise aus einem oberen und unteren Teilgehäuse (28a bzw. 28b) zusammengesetzt ist.

22. Piezoelektrisches Dämpfungselement nach einem der Ansprüche 17-21, **dadurch gekennzeichnet, dass** im elektrischen Netzwerk ein zeitlich variabler Widerstand vorgesehen ist.
